# EUROPEAN PATENT APPLICATION

(11) **EP 2 838 218 A1**
(43) Date of publication of application: **18.02.2015**
(21) Application number: 13869851.9
(22) Date of filing: 29.06.2013
(51) Int. Cl.: H04L 1/06

(54) **SIGNAL MEASUREMENT METHOD, DEVICE AND SYSTEM**

(71) Applicant: Huawei Technologies Co., Ltd., Shenzhen, Guangdong 518129 (CN)
(72) Inventor: YAO, Pei, Shenzhen, Guangdong 518129 (CN); ZHANG, Yanqiang, Shenzhen, Guangdong 518129 (CN); HUAN, Haibin, Shenzhen, Guangdong 518129 (CN)
(74) Representative: Thun, Clemens
(86) International application number: PCT/CN2013/078489
(87) International publication number: WO 2014/205830

(57) **Abstract**

The present invention discloses a signal measurement method, device, and system. The method is applicable to a radio communications system, the radio communications system includes a super cell, and the super cell includes two or more sectors; the method includes: sending, by a base station controller, to-be-measured information to a base station, where the to-be-measured information includes a sector identifier of a to-be-measured sector, a carrier identifier of a to-be-measured carrier within the to-be-measured sector, and radio resource information of a to-be-measured user equipment UE, so that the base station measures an uplink signal of the to-be-measured UE within the to-be-measured sector according to the to-be-measured information, and reports an acquired uplink signal measurement result to the base station controller; and receiving, by the base station controller, the uplink signal measurement result reported by the base station. By using embodiments of the present invention, it is implemented that a base station measures an uplink signal of a user equipment within a sector in a super cell, so that a base station controller performs operations such as mobility management according to a measurement result.

## Description

### TECHNICAL FIELD

The present invention relates to a mobile communications system, and in particular, to a signal measurement method, device, and system.

### BACKGROUND

With frequency spectrum refarming of the Global System for Mobile Communications (Global System for Mobile Communications, GSM), a frequency band of the GSM system becomes narrower. To reduce interference of the GSM system and improve network quality, existing GSM cells need to be combined, that is, broadcast control channel (broadcast control channel, BCCH) carries of a plurality of cells are combined, whereas traffic channel (traffic channel, TCH) carriers are not combined, thereby forming a super cell. The combined super cell includes a plurality of sectors with different coverage areas.

The foregoing cell combination causes an impact on a network structure. A user equipment on a TCH carrier can measure downlink signals on the TCH carrier of a service sector in a super service cell, a BCCH carrier of the super service cell, and a BCCH carrier of a neighboring cell, but cannot measure the downlink signal of the TCH carrier in a neighboring sector, that is, the user equipment on a network cannot properly measure the downlink signal of the neighboring sector in the super cell, resulting a failure of inter-sector handover decision-making and thereby affecting mobility management for the user equipment on the network.

### SUMMARY

Embodiments of the present invention provide a signal measurement method, device, and system, which can implement measurement of signal quality in sectors of a super cell on a network side.

A first aspect of the present invention provides a signal measurement method, where the method is applicable to a radio communications system, the radio communications system includes a super cell, the super cell includes two or more sectors, and the method includes: sending, by a base station controller, to-be-measured information to a base station, where the to-be-measured information includes a sector identifier of a to-be-measured sector in the super cell and radio resource information of a to-be-measured user equipment UE, so that the base station measures an uplink signal of the to-be-measured UE within the to-be-measured sector according to the to-be-measured information, and reports an acquired uplink signal measurement result to the base station controller; and receiving, by the base station controller, the uplink signal measurement result reported by the base station, where the radio resource information is used to indicate a radio resource occupied by the to-be-measured UE within a service sector of the to-be-measured UE, and the to-be-measured sector and the service sector belong to a same super cell.

With reference to the first aspect, in a first implementation manner of the first aspect, the radio resource information includes: a time-frequency resource occupied by the to-be-measured UE within the service sector and a training sequence code TSC of the to-be-measured UE within the service sector; or, the time-frequency resource and the TSC, and frequency hopping information and/or a discontinuous transmission DTX flag of the to-be-measured UE within the service sector.

With reference to the first aspect or the first implementation manner of the first aspect, in a second implementation manner of the first aspect, the to-be-measured information further includes measurement time and/or a user identifier of the to-be-measured UE.

With reference to the first aspect or the first implementation manner or the second implementation manner of the first aspect, in a third implementation manner of the first aspect, before the sending, by a base station controller, to-be-measured information to a base station, the method further includes: determining, by the base station controller, at least one neighboring sector of the service sector as the to-be-measured sector according to configuration information of neighboring sectors of the service sector, and acquiring the sector identifier of the to-be-measured sector; or selecting, by the base station controller, at least one sector including an idle carrier among the neighboring sectors as the to-be-measured sector according to the configuration information of the neighboring sectors of the service sector and idle carriers of the neighboring sectors of the service sector, and acquiring the sector identifier of the to-be-measured sector.

With reference to the third implementation manner of the first aspect, in a fourth implementation manner of the first aspect, the to-be-measured information further includes a carrier identifier of a to-be-measured carrier within the to-be-measured sector, and after the acquiring the sector identifier of the to-be-measured sector, the method further includes: determining, by the base station controller, the to-be-measured carrier within the to-be-measured sector according to the idle carrier in the to-be-measured sector; and acquiring, by the base station controller, the carrier identifier of the to-be-measured carrier.

With reference to the first aspect or any of the foregoing implementation manners of the first aspect, in a fifth implementation manner of the first aspect, before the sending, by a base station controller, to-be-measured information to a base station, the method further includes: acquiring, by the base station controller, a signal measurement result of the to-be-measured UE within the service sector. The sending, by a base station controller, to-be-measured information to a base station includes: judging, by the base station controller, whether the signal measurement result of the to-be-measured UE within the service sector meets a preset condition; if yes, sending the to-be-measured information to the base station.

With reference to the first aspect or any of the foregoing implementation manners of the first aspect, in a sixth implementation manner of the first aspect, the method further includes: if the base station controller determines to release the radio resource indicated by the radio resource information, sending a measurement stop message to the base station, so that the base station stops measuring the uplink signal of the to-be-measured UE according to the measurement stop message.

A second aspect of the present invention provides a signal measurement method, where the method is applicable to a radio communications system, the radio communications system includes a super cell, the super cell includes two or more sectors, and the method includes: receiving, by a base station, to-be-measured information sent by a base station controller, where the to-be-measured information includes a sector identifier of a to-be-measured sector in the super cell and radio resource information of a to-be-measured user equipment UE, the radio resource information is used to indicate a radio resource occupied by the to-be-measured UE within a service sector of the to-be-measured UE; and measuring, by the base station, an uplink signal of the to-be-measured UE within the to-be-measured sector according to the to-be-measured information, and reporting an acquired uplink signal measurement result to the base station controller.

With reference to the second aspect, in a first implementation manner of the second aspect, the radio resource information includes: a time-frequency resource occupied by the to-be-measured UE within the service sector and a training sequence code TSC of the to-be-measured UE within the service sector; or, the time-frequency resource and the TSC, and frequency hopping information and/or a discontinuous transmission DTX flag of the to-be-measured UE within the service sector.

With reference to the second aspect or the first implementation manner of the second aspect, in a second implementation manner of the second aspect, the measuring, by the base station, an uplink signal of the to-be-measured UE within the to-be-measured sector according to the to-be-measured information includes: determining, by the base station, a to-be-measured carrier according to an idle carrier within the to-be-measured sector indicated by the sector identifier; configuring, by the base station, a radio resource for the to-be-measured UE on the to-be-measured carrier of the to-be-measured sector according to the radio resource information; and measuring, by the base station, the uplink signal of the to-be-measured UE on the configured radio resource.

With reference to the second aspect or the first implementation manner of the second aspect, in a third implementation manner of the second aspect, the to-be-measured information further includes a carrier identifier of a to-be-measured carrier within the to-be-measured sector. The measuring, by the base station, an uplink signal of the to-be-measured UE within the to-be-measured sector according to the to-be-measured information includes: configuring, by the base station, a radio resource for the to-be-measured UE on the to-be-measured carrier indicated by the carrier identifier within the to-be-measured sector indicated by the sector identifier according to the radio resource information; and measuring, by the base station, the uplink signal of the to-be-measured UE on the configured radio resource.

With reference to the second implementation manner or the third implementation manner of the second aspect, in a fourth implementation manner of the second aspect, the measuring, by the base station, the uplink signal of the to-be-measured UE on the configured radio resource includes: within a measurement period, measuring all frames, a specific frame, or a slow associated control channel SACCH frame on a channel corresponding to the configured radio resource.

With reference to the second implementation manner or the third implementation manner of the second aspect, in a fifth implementation manner of the second aspect, the to-be-measured information further includes measurement time, and the measuring, by the base station, the uplink signal of the to-be-measured UE on the configured radio resource includes: within the measurement time, measuring all frames, a specific frame, or an SACCH frame on a channel corresponding to the configured radio resource at intervals of a measurement period.

With reference to the second aspect or any of the foregoing implementation manners of the second aspect, in a sixth implementation manner of the second aspect, the method further includes: receiving, by the base station, a measurement stop message sent by the base station controller; and stopping, by the base station, measuring the uplink signal of the to-be-measured UE according to the measurement stop message.

A third aspect of the present invention provides a base station controller, including: a processing unit, configured to acquire to-be-measured information, where the to-be-measured information includes a sector identifier of a to-be-measured sector in a super cell and radio resource information of a to-be-measured user equipment UE, and the super cell includes two or more sectors; a sending unit, configured to send the to-be-measured information acquired by the processing unit to a base station, so that the base station measures an uplink signal of the to-be-measured UE within the to-be-measured sector according to the to-be-measured information, and reports an acquired uplink signal measurement result to the base station controller; and a receiving unit, configured to receive the uplink signal measurement result reported by the base station, where the radio resource information is used to indicate a radio resource occupied by the to-be-measured UE within a service sector of the to-be-measured UE.

With reference to the third aspect, in a first implementation manner of the third aspect, the radio resource information includes: a time-frequency resource occupied by the to-be-measured UE within the service sector and a training sequence code TSC of the to-be-measured UE within the service sector; or, the time-frequency resource and the TSC, and frequency hopping information and/or a discontinuous transmission DTX flag of the to-be-measured UE within the service sector.

With reference to the third aspect or the first implementation manner of the third aspect, in a second implementation manner of the third aspect, the to-be-measured information further includes measurement time and/or a user identifier of the to-be-measured UE.

With reference to the third aspect or the first or the second implementation manner of the third aspect, in a third implementation manner of the third aspect, the processing unit includes a first determining unit, configured to: determine at least one neighboring sector of the service sector as the to-be-measured sector according to configuration information of neighboring sectors of the service sector, acquire the sector identifier of the to-be-measured sector, and send the sector identifier to the sending unit; or select at least one sector including an idle carrier among the neighboring sectors as the to-be-measured sector according to the configuration information of the neighboring sectors of the service sector and idle carriers in the neighboring sectors of the service sector, acquire the sector identifier of the to-be-measured sector, and send the sector identifier to the sending unit.

With reference to the third implementation manner of the third aspect, in a fourth implementation manner of the third aspect, the to-be-measured information further includes a carrier identifier of a to-be-measured carrier within the to-be-measured sector; the processing unit further includes: a second determining unit, configured to determine the to-be-measured carrier within the to-be-measured sector according to the idle carrier within the to-be-measured sector determined by the first determining unit, acquire the carrier identifier of the to-be-measured carrier, and send the carrier identifier to the sending unit.

With reference to the third aspect or any of the foregoing implementation manners of the third aspect, in a fifth implementation manner of the third aspect, the receiving unit is further configured to acquire an uplink signal measurement result of the to-be-measured UE within the service sector. The processing unit is further configured to: judge whether the uplink signal measurement result of the to-be-measured UE within the service sector meets a preset condition; if yes, send the to-be-measured information to the base station.

With reference to the third aspect or any of the foregoing implementation manners of the third aspect, in a sixth implementation manner of the third aspect, the processing unit is further configured to: if it is determined to release the radio resource indicated by the radio resource information, instruct the sending unit to send a measurement stop message to the base station, so that the base station stops measuring the uplink signal of the to-be-measured UE according to the measurement stop message.

A fourth aspect of the present invention provides a base station, including: a receiving unit, configured to receive to-be-measured information sent by a base station controller, where the to-be-measured information includes a sector identifier of a to-be-measured sector in a super cell and radio resource information of a to-be-measured user equipment UE, the radio resource information is used to indicate a radio resource occupied by the to-be-measured UE within a service sector of the to-be-measured UE, and the super cell includes two or more sectors; a measuring unit, configured to measure an uplink signal of the to-be-measured UE within the to-be-measured sector according to the to-be-measured information received by the receiving unit; and a sending unit, configured to report an uplink signal measurement result acquired by the measuring unit to the base station controller.

With reference to the fourth aspect, in a first implementation manner of the fourth aspect, the radio resource information includes: a time-frequency resource occupied by the to-be-measured UE within the service sector and a training sequence code TSC of the to-be-measured UE within the service sector; or, the time-frequency resource and the TSC, and frequency hopping information and/or a discontinuous transmission DTX flag of the to-be-measured UE within the service sector.

With reference to the fourth aspect or the first implementation manner of the fourth aspect, in a second implementation manner of the fourth aspect, the base station further includes a determining unit and a first configuration unit, where: the determining unit is configured to determine a to-be-measured carrier according to an idle carrier within the to-be-measured sector indicated by the sector identifier in the to-be-measured information received by the receiving unit; the first configuration unit is configured to configure a radio resource for the to-be-measured UE on the to-be-measured carrier of the to-be-measured sector determined by the determining unit, according to the radio resource information in the to-be-measured information received by the receiving unit; and the measuring unit is further configured to measure the uplink signal of the to-be-measured UE on the radio resource configured by the first configuration unit.

With reference to the fourth aspect or the first implementation manner of the fourth aspect, in a third implementation manner of the fourth aspect, the to-be-measured information further includes a carrier identifier of a to-be-measured carrier within the to-be-measured sector. The base station further includes a second configuration unit, where the second configuration unit is configured to configure a radio resource for the to-be-measured UE on the to-be-measured carrier indicated by the carrier identifier within the to-be-measured sector indicated by the sector identifier according to the radio resource information in the to-be-measured information received by the receiving unit; the measuring unit is further configured to measure the uplink signal of the to-be-measured UE on the radio resource configured by the second configuration unit.

With reference to the second or the third implementation manner of the fourth aspect, in a fourth implementation manner of the fourth aspect, the measuring unit is specifically configured to: within a measurement period, measure all frames, a specific frame, or a slow associated control channel SACCH frame on a channel corresponding to the configured radio resource.

With reference to the second or the third implementation manner of the fourth aspect, in a fifth implementation manner of the fourth aspect, the to-be-measured information further includes measurement time and the measuring unit is specifically configured to: within the measurement time, measure all frames, a specific frame, or an SACCH frame on a channel corresponding to the configured radio resource at intervals of a measurement period.

With reference to the fourth aspect or any of the foregoing implementation manners of the fourth aspect, in a sixth implementation manner of the fourth aspect, the receiving unit is further configured to receive a measurement stop message sent by the base station controller; the measuring unit is further configured to stop measuring the uplink signal of the to-be-measured UE according to the measurement stop message received by the receiving unit.

According to the foregoing technical solutions, by using the embodiments of the present invention, the base station controller sends the to-be-measured information to the base station, so that the base station measures the uplink signal of the to-be-measured UE in the to-be-measured sector according to the measurement information, and reports the acquired uplink signal measurement result to the base station controller; the base station controller receives the uplink signal measurement result reported by the base station. Therefore, the base station controller can acquire the measurement result of the uplink signal of the user equipment within each sector in the super cell, so that the base station controller can make a sector handover decision according to the measurement result of the uplink signal, ensuring call quality of the user equipment and improving user experience.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show some embodiments of the present invention, and a person of ordinary skill in the art may still derive other drawings from these accompanying drawings without creative efforts.
FIG. 1 is a flowchart of a signal measurement method according to an embodiment of the present invention;
FIG. 2 is a flowchart of another signal measurement method according to an embodiment of the present invention;
FIG. 3 is a schematic diagram of a signal measurement method according to an embodiment of the present invention;
FIG. 4 is a schematic diagram of another signal measurement method according to an embodiment of the present invention;
FIG. 5 is a structural diagram of a base station controller according to an embodiment of the present invention;
FIG. 6 is a structural diagram of another base station controller according to an embodiment of the present invention;
FIG. 7 is a structural diagram of still another base station controller according to an embodiment of the present invention;
FIG. 8 is a structural diagram of a base station according to an embodiment of the present invention;
FIG. 8(a) is a structural diagram of another base station according to an embodiment of the present invention;
FIG. 8(b) is a structural diagram of still another base station according to an embodiment of the present invention;
FIG. 9 is a structural diagram of hardware of a base station controller according to an embodiment of the present invention; and
FIG. 10 is a structural diagram of hardware of a base station according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

Various aspects are described in this specification with reference to a user equipment and/or a base station and/or a base station controller.

The user equipment may be a wireless terminal or a wired terminal. The wireless terminal may refer to a device that provides a user with voice and/or data connectivity, a handheld device with a radio connection function, or another processing device connected to a radio modem. The wireless terminal may communicate with one or more core networks through a radio access network (such as RAN, Radio Access Network). The wireless terminal may be a mobile terminal, such as a mobile phone (also referred to as a "cellular" phone) and a computer with a mobile terminal, for example, may be a portable, pocket-sized, handheld, computer built-in, or vehicle-mounted mobile apparatus, which exchanges voice and/or data with the radio access network. For example, it may be a device such as a personal communication service (PCS, Personal Communication Service) phone, a cordless telephone set, a session initiation protocol (SIP) phone, a wireless local loop (WLL, Wireless Local Loop) station, or a personal digital assistant (PDA, Personal Digital Assistant). The wireless terminal may also be called a system, a subscriber unit (Subscriber Unit), a subscriber station (Subscriber Station), a mobile station (Mobile Station), a mobile terminal (Mobile), a remote station (Remote Station), an access point (Access Point), a remote terminal (Remote Terminal), an access terminal (Access Terminal), a user terminal (User Terminal), a user agent (User Agent), a user device (User Device), or a user equipment (User Equipment).

The base station (for example, an access point) may refer to a device in communication with a wireless terminal via one or more sectors at an air interface in an access network. The base station may be configured to mutually convert a received over-the-air frame and an IP packet and serve as a router between the wireless terminal and a rest portion of the access network, where the rest portion of the access network may include an Internet protocol (IP) network. The base station may also coordinate attribute management of the air interface. For example, the base station may be a base station (BTS, Base Transceiver Station) in GSM or the CDMA, may also be a base station (NodeB) in WCDMA, and may further be an evolved NodeB (NodeB, eNB, or e-NodeB, evolutional Node B) in the LTE, which is not limited in the present invention.

The base station controller may be a base station controller (BSC, base station controller) in GSM or CDMA, or a radio network controller (RNC, Radio Network Controller) in WCDMA, which is not limited in the present invention.

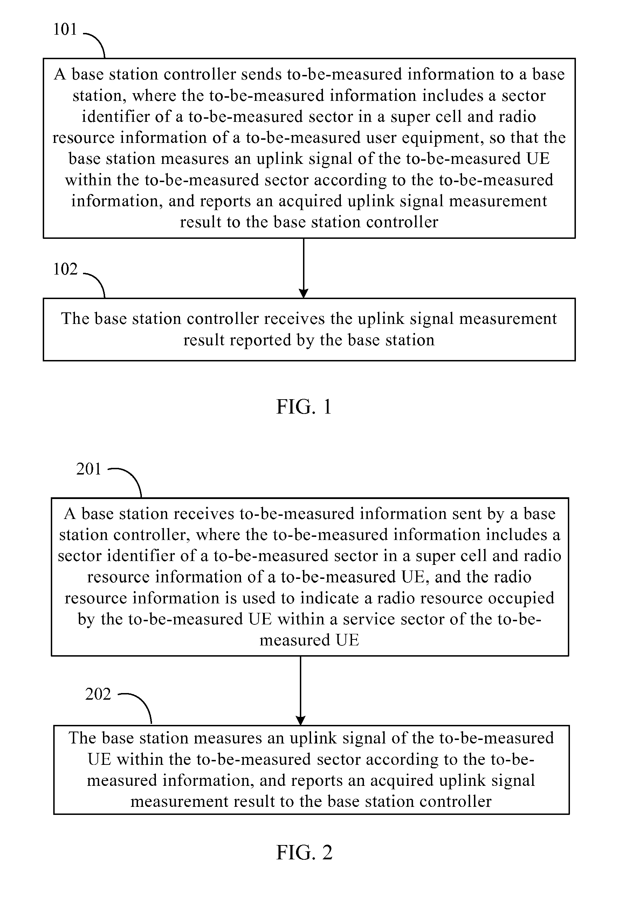

As shown in FIG. 1, an embodiment of the present invention provides a signal measurement method, where the method is applicable to a radio communications system, the radio communications system includes a super cell, the super cell includes two or more sectors, and the method is performed by a base station controller, which is specifically described as follows:
101: The base station controller sends to-be-measured information to a base station, where the to-be-measured information includes a sector identifier of a to-be-measured sector in the super cell and radio resource information of a to-be-measured user equipment, so that the base station measures an uplink signal of the to-be-measured UE within the to-be-measured sector according to the to-be-measured information, and reports an acquired uplink signal measurement result to the base station controller.

The sector identifier of the to-be-measured sector is used to indicate the to-be-measured sector. For example, the sector identifier can specifically be a sector number of the base station controller and can further be a sector number of the super cell, which is not further described herein; the to-be-measured sector can be all sectors except a service sector of the to-be-measured UE in the super cell to which the service sector of the to-be-measured UE belongs and can also be determined according to configuration information of neighboring sectors of the service sector of the to-be-measured UE, which is not limited herein. Specifically, the configuration information of the neighboring sectors of the service sector can be preset in the base station controller.

The radio resource information is used to indicate a radio resource occupied by the to-be-measured UE within the service sector of the to-be-measured UE, and can specifically include a time-frequency resource occupied by the to-be-measured UE within the service sector and a training sequence code (training sequence code, TSC) of the to-be-measured UE within the service sector, where the time-frequency resource occupied by the to-be-measured UE within the service sector can include a frequency of a carrier occupied by the to-be-measured UE within the service sector and information about a timeslot occupied by the to-be-measured UE within the service sector. For example, when the to-be-measured UE occupies a timeslot within the service sector, the information about the timeslot occupied by the to-be-measured UE includes a timeslot number of the timeslot; when the to-be-measured UE occupies a sub-timeslot in the timeslot, the information about the timeslot occupied by the to-be-measured UE includes the timeslot number of the timeslot and a sub-timeslot number of the sub-timeslot. For another example, when the to-be-measured UE adopts a frequency hopping manner to send and receive a signal within the service cell, the frequency of the carrier occupied by the to-be-measured UE includes all frequencies in a frequency hopping set.

Further, the radio resource information can further include frequency hopping information and/or a discontinuous transmission (discontinuous transmission, DTX) flag of the to-be-measured UE within the service sector of the to-be-measured UE, where the frequency hopping information can specifically include a mobile allocation index offset (mobile allocation index offset, MAIO) and a hopping sequence number (Hopping Sequence Number, HSN), or a frequency hopping type, for example, baseband frequency hopping or radio frequency hopping. It should be noted that, when the to-be-measured UE adopts a baseband frequency hopping manner to send and receive a signal within the service sector, a carrier identifier of a to-be-measured carrier includes carrier identifiers of a plurality of to-be-measured carriers.

It should be pointed out that, the service sector refers to the sector that provides a service for the to-be-measured UE and can belong to a same super cell as the to-be-measured sector and can also not belong to the same super cell. The super cell can be obtained by combining a plurality of cells.

Optionally, the to-be-measured information can further include at least one type of the following information: measurement time, a user identifier of the to-be-measured UE, and the carrier identifier of the to-be-measured carrier within the to-be-measured sector. The carrier identifier is used to indicate the to-be-measured carrier. For example, the carrier identifier can specifically be a carrier number within the to-be-measured sector and can also be a carrier number within the super cell to which the to-be-measured sector belongs; the measurement time can specifically be start time and end time of measurement and can further be a time length of the measurement; the user identifier of the to-be-measured UE can be a temporary user identifier of the to-be-measured UE allocated by a BSC, a temporary mobile subscriber identity (temporary mobile subscriber identity, TMSI) or an international mobile subscriber identity (international mobile subscriber identity, IMSI) of the to-be-measured UE, which is not limited herein.

102: The base station controller receives the uplink signal measurement result reported by the base station.

The uplink signal measurement result can include at least one type of the following information: a received signal level (RxLev), received signal quality (RxQual), a carrier-to-interference ratio (carrier-to-interference ratio, CIR), a mean bit error rate (meanbep), a radio quality indication (radio quality indication, RQI), and timing advance (timing advance, TA), which is not limited herein.

In the uplink signal measurement method according to this embodiment of the present invention, the base station controller sends the to-be-measured information to the base station, so that the base station measures the uplink signal of the to-be-measured UE within the to-be-measured sector according to the to-be-measured information and reports the acquired uplink signal measurement result to the base station controller; the base station controller receives the uplink signal measurement result reported by the base station. Therefore, the base station controller can acquire the measurement result of the uplink signal of the user equipment within each sector in the super cell, so that the base station controller can make a sector handover decision according to the measurement result, ensuring call quality of the user equipment and improving user experience.

Optionally, in an implementation scenario, after step 102, the method further includes:
if the base station controller determines to release the radio resource indicated by the radio resource information, sending a measurement stop message to the base station.

The measurement stop message can include the sector identifier of the to-be-measured sector and the radio resource information. It should be pointed out that, when the to-be-measured information includes the user identifier of the to-be-measured UE, the measurement stop message can include only the user identifier of the to-be-measured UE. For related description about the user identifier of the to-be-measured UE, see step 101.

For example, when the to-be-measured UE encounters a call drop within the service sector or actively terminates a service, the base station controller determines to release the radio resource indicated by the radio resource information, that is, determines to release the radio resource occupied by the to-be-measured UE within the service sector, and sends the measurement stop message to the base station, so as to instruct the base station to stop measuring the uplink signal of the to-be-measured UE within the to-be-measured sector.

In this implementation scenario, when determining to release the radio resource indicated by the radio resource information, the base station controller sends the measurement stop message to the base station, so as to instruct the base station to stop measuring the uplink signal of the to-be-measured UE within the to-be-measured sector, and releases the radio resource occupied by the to-be-measured UE within the to-be-measured sector.

Optionally, in another implementation scenario, before step 101, the method further includes:
determining, by the base station controller, at least one neighboring sector of the service sector as the to-be-measured sector according to configuration information of neighboring sectors of the service sector of the to-be-measured UE, and acquiring the sector identifier of the to-be-measured sector; or
selecting, by the base station controller, at least one sector including an idle carrier among the neighboring sectors as the to-be-measured sector according to the configuration information of the neighboring sectors of the service sector and idle carriers of the neighboring sectors of the service sector, and acquiring the sector identifier of the to-be-measured sector.

The determining at least one neighboring sector of the service sector as the to-be-measured sector can specifically be: the base station determines all neighboring sectors of the service sector as the to-be-measured sectors according to the configuration information of the neighboring sectors of the service sector, and can also determine the to-be-measured sector according to the configuration information of the neighboring sector of the service sector and load conditions of the neighboring sectors, or alarm states of the neighboring sectors, which are not listed one by one herein.

The selecting at least one sector including an idle carrier among the neighboring sectors as the to-be-measured sector can specifically be: when at least one sector including an idle carrier exists in the neighboring sectors of the service sector of the to-be-measured UE, the at least one sector can be determined as the to-be-measured sector, and then an idle carrier is separately selected from the at least one sector as the to-be-measured carrier. It is obvious that, a load and an alarm can also be used as selection conditions during a process of selecting the to-be-measured sector.

For example, when the to-be-measured UE adopts the baseband frequency hopping manner to send and receive a signal within the service cell, the base station controller determines the number of to-be-measured carriers according to the number of frequencies of the baseband frequency hopping, specifically, the number of the to-be-measured carriers can be the same as the number of frequencies of the baseband frequency hopping, and further determines the to-be-measured sector and the to-be-measured carriers within the to-be-measured sector according to the number of the to-be-measured carriers; when the to-be-measured UE adopts the radio frequency hopping manner to send and receive a signal within the service cell, the base station controller can determine only one to-be-measured carrier.

For details about the sector identifier of the to-be-measured sector, see related description in step 101.

Further, the to-be-measured information further includes the carrier identifier of the to-be-measured carrier within the to-be-measured sector, and after acquiring the sector identifier of the to-be-measured sector, the method further includes:
determining, by the base station controller, the to-be-measured carrier within the to-be-measured sector according to the idle carrier in the to-be-measured sector; and
acquiring, by the base station controller, the carrier identifier of the to-be-measured carrier.

The to-be-measured carrier is an idle carrier within the to-be-measured sector and can specifically be acquired by selection according to a preset selection condition. For example, an idle carrier with a smallest carrier number within the to-be-measured sector can be selected according to carrier numbers, and an idle carrier with a longest mean idle time can further be selected according to mean idle time of carriers, which are not listed one by one herein.

In this implementation scenario, the base station controller determines the to-be-measured sector according to the configuration information of the neighboring sector of the service sector, which can prevent a resource waste caused by measurement of an uplink signal in the sector, in the super cell, that cannot be used as a target sector for handover; in addition, the base station controller determines the to-be-measured sector according to the configuration information of the neighboring sectors of the service sector of the to-be-measured UE and the idle carriers in the neighboring sectors, which can not only prevent the resource waste caused by the measurement of the uplink signal in the sector, in the super cell, that cannot be used the target sector for handover, but can also prevent determining a sector that does not include an idle carrier in the neighboring sectors as the to-be-measured sector.

Optionally, in still another implementation scenario, before step 101, the method further includes: acquiring, by the base station controller, a signal measurement result of the to-be-measured UE within the service sector; step 101 can include:
the base station controller judges whether the signal measurement result of the to-be-measured UE within the service sector meets a preset condition; if yes, the base station controller sends the to-be-measured information to the base station.

The signal measurement result can include an uplink signal measurement result and/or a downlink signal measurement result. Specifically, the uplink signal measurement result can be acquired after the base station to which the service sector belongs measures the uplink signal of the to-be-measured UE within the service sector and sending the uplink signal measurement result to the base station controller; the downlink signal measurement result can be acquired after the to-be-measured UE measures a downlink signal in the service sector and sending the downlink signal measurement result to the base station controller. The downlink signal measurement result can specifically include at least one type of the following information: a received signal level, received signal quality, a carrier-to-interference ratio, a mean bit error rate, and a radio quality indication. In addition, the preset condition can be preset in the base station controller and can also be configured for the base station controller according to a user requirement by using a device.

Specifically, that the base station controller judges whether the signal measurement result of the to-be-measured UE within the service sector meets a preset condition can include:
the base station controller judges whether the uplink signal measurement result of the to-be-measured UE within the service sector meets the preset condition for the uplink signal; if yes, the base station controller sends the to-be-measured information to the base station; or
the base station controller judges whether the uplink signal measurement result of the to-be-measured UE within the service sector meets the preset condition for the uplink signal and whether the downlink signal measurement result meets the preset condition for the downlink signal; if yes, the base station controller sends the to-be-measured information to the base station; or
the base station controller judges whether the downlink signal measurement result of the to-be-measured UE within the service sector meets the preset condition for the downlink signal; if yes, the base station controller sends the to-be-measured information to the base station.

It is obvious that, the base station controller can also determine whether to send the to-be-measured information to the base station according to a current status of the service sector, for example, according to a load of the service sector. When the load is larger than a preset threshold, the to-be-measured information is sent to the base station. The base station controller can also determine whether to send the to-be-measured information to the base station according to an alarm status of the service sector, which is not further described herein.

As shown in FIG. 2, an embodiment of the present invention provides another signal measurement method, where the method is applicable to a radio communications system, the radio communications system includes a super cell, the super cell includes two or more sectors, which is specifically described as follows:
201: A base station receives to-be-measured information sent by a base station controller, where the to-be-measured information includes a sector identifier of a to-be-measured sector in the super cell and radio resource information of a to-be-measured UE, and the radio resource information is used to indicate a radio resource occupied by the to-be-measured UE within a service sector of the to-be-measured UE.

A specific description of the radio resource information is consistent with the related description in step 101, which is not further described herein.

Optionally, the to-be-measured information can further include at least one type of the following information: measurement time, a user identifier of the to-be-measured UE, and a carrier identifier of a to-be-measured carrier within the to-be-measured sector. The measurement time, the user identifier of the to-be-measured UE, and the to-be-measured carrier are consistent with the related description in the embodiment shown in FIG. 1.

It should be pointed out that, the service sector refers to the sector that provides a service for the to-be-measured UE and can belong to a same super cell as the to-be-measured sector and can also not belong to the same super cell. The super cell can be obtained by combining a plurality of cells.

202: The base station measures an uplink signal of the to-be-measured UE within the to-be-measured sector according to the to-be-measured information, and reports an acquired uplink signal measurement result to the base station controller.

Optionally, in step 202, that the base station measures an uplink signal of the to-be-measured UE within the to-be-measured sector according to the to-be-measured information can specifically include:
the base station determines the to-be-measured carrier according to an idle carrier within the to-be-measured sector indicated by the sector identifier;
the base station configures a radio resource for the to-be-measured UE on the to-be-measured carrier of the to-be-measured sector according to the radio resource information; and
the base station measures the uplink signal of the to-be-measured UE on the configured radio resource.

Optionally, when the to-be-measured information in step 201 further includes the carrier identifier of the to-be-measured carrier within the to-be-measured sector, in step 202, that the base station measures an uplink signal of the to-be-measured UE within the to-be-measured sector according to the to-be-measured information can specifically include:
the base station configures a radio resource for the to-be-measured UE on the to-be-measured carrier indicated by the carrier identifier in the to-be-measured sector indicated by the sector identifier according to the radio resource information of the to-be-measured UE; and
the base station measures the uplink signal of the to-be-measured UE on the configured radio resource.

In the uplink signal measurement method according to this embodiment of the present invention, the base station receives the to-be-measured information sent by the base station controller; the base station measures the uplink signal of the to-be-measured UE within the to-be-measured sector according to the to-be-measured information and reports the acquired uplink signal measurement result to the base station controller. Therefore, the base station controller can acquire the measurement result of the uplink signal of the user equipment within each sector in the super cell, so that the base station controller can make a sector handover decision according to the measurement result, ensuring call quality of the user equipment and improving user experience.

Optionally, in an implementation scenario, the method further includes:
203: The base station receives a measurement stop message sent by the base station controller, where the measurement stop message includes the sector identifier of the to-be-measured sector and the radio resource information of the to-be-measured UE, or the measurement stop message includes the user identifier of the to-be-measured UE.

For related description of the user identifier of the to-be-measured UE, see step 101.

204: The base station stops measuring the uplink signal of the to-be-measured UE according to the measurement stop message.

When the measurement stop message includes the sector identifier of the to-be-measured sector and the radio resource information of the to-be-measured UE, step 204 can specifically include: the base station acquires the to-be-measured sector according to the sector identifier and determines the radio resource occupied within the to-be-measured sector according to the radio resource information of the to-be-measured UE; and the base station releases the radio resource occupied by the to-be-measured UE within the to-be-measured sector.

It should be pointed out that, if the uplink signals of two to-be-measured UEs are separately measured in different timeslots of a to-be-measured carrier within a certain to-be-measured sector at the same time, the base station can determine the UE for which the uplink signal measurement is to be stopped according to a timeslot number in the radio resource information of the to-be-measured UE carried in the measurement stop message; if the uplink signals of two to-be-measured UEs are measured in a same timeslot of a to-be-measured carrier within a certain to-be-measured sector at the same time, the base station can determine the UE for which the uplink signal measurement is to be stopped according to a TSC in the radio resource information of the to-be-measured UE carried in the measurement stop message. Further, when the base station determines to stop the measurement of the uplink signals of the to-be-measured UEs on the to-be-measured carrier, the base station resumes a configuration of the to-be-measured carrier to a configuration before step 202.

When the measurement stop message includes the user identifier of the to-be-measured UE, step 204 can specifically include: determining the to-be-measured sector of the to-be-measured UE and the radio resource occupied within the to-be-measured sector according to the user identifier of the to-be-measured UE; and the base station releases the radio resource occupied by the to-be-measured UE within the to-be-measured sector. It should be pointed out that, a prerequisite for including the user identifier of the to-be-measured UE in the measurement stop message is that the to-be-measured information in step 201 includes the user identifier of the to-be-measured UE, and the base station records the user identifier, the to-be-measured sector of the to-be-measured UE, and the radio resource configured by the base station for the to-be-measured UE within the to-be-measured sector.

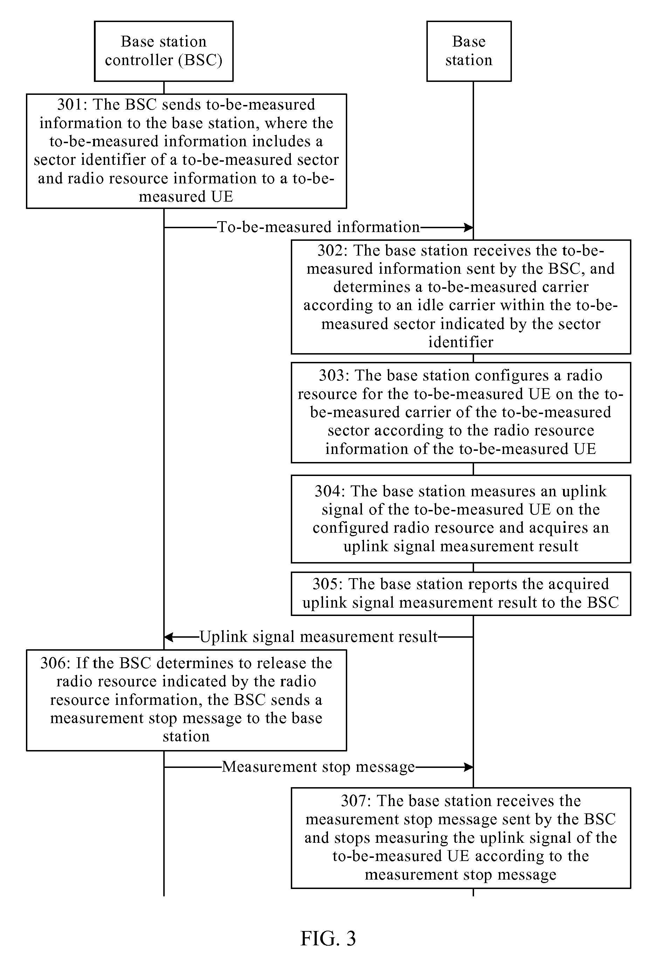

As shown in FIG. 3, an embodiment of the present invention provides still another signal measurement method, which is described by using a BSC as an example and specifically described as follows:
301: The BSC sends to-be-measured information to a base station, where the to-be-measured information includes a sector identifier of a to-be-measured sector and radio resource information to a to-be-measured UE.

For specific description of the radio resource information of the to-be-measured UE, see related description in step 101.

302: The base station receives the to-be-measured information sent by the BSC, and determines a to-be-measured carrier according to an idle carrier within the to-be-measured sector indicated by the sector identifier.

Specifically, the to-be-measured carrier can be acquired by selection according to a preset selection condition, where the preset selection condition can be configured by a user for the base station by using the BSC and can also be preset in the base station. For example, an idle carrier with a smallest carrier number within the to-be-measured sector can be selected, and an idle carrier within a longest mean idle time can also be selected, which is not limited herein.

303: The base station configures a radio resource for the to-be-measured UE on the to-be-measured carrier of the to-be-measured sector according to the radio resource information of the to-be-measured UE.

For example, when the radio resource information of the to-be-measured UE includes only a time-frequency resource and TSC occupied by the to-be-measured UE within a service sector of the to-be-measured UE, and the time-frequency resource includes a frequency of a carrier occupied by the to-be-measured UE within the service sector and information about a timeslot occupied by the to-be-measured UE within the service sector, the base station first configures a frequency of the to-be-measured carrier as the frequency of the carrier occupied by the to-be-measured UE within the service sector; then, the base station configures the TSC of the to-be-measured UE within the service sector for the timeslot indicated by the timeslot information of the to-be-measured carrier, so that the base station uses the TSC to parse an uplink signal of the to-be-measured UE in the timeslot.

Further, when the radio resource information further includes a DTX flag, the base station configures the DTX flag for the timeslot indicated by the timeslot information of the to-be-measured carrier, so that the base station determines whether the base station measures only a specific frame in the timeslot according to the DTX flag, where the specific frame refers to a frame with a specific frame number, which belongs to the prior art and is not further described herein.

Further, when the radio resource information includes frequency hopping information, the frequency hopping information is configured for the timeslot indicated by the timeslot information of the to-be-measured carrier, so that the base station acquires a frequency hopping algorithm for the to-be-measured UE according to the frequency hopping information, and therefore measures the uplink signal of the to-be-measured UE according to the frequency hopping algorithm. Specifically, when the frequency hopping is baseband frequency hopping, the base station separately configures frequencies of a plurality of to-be-measured carriers indicated by carrier identifiers as the frequencies of the carriers occupied by the to-be-measured UE within the service sector, and configures radio resources for the to-be-measured UE on the plurality of to-be-measured carriers; when the frequency hopping is radio frequency hopping, the base station can

304: The base station measures the uplink signal of the to-be-measured UE on the configured radio resource and acquires an uplink signal measurement result.

Specifically, step 304 can include: within a measurement period, measuring all frames, a specific frame, or a slow associated control channel (slow associated control channel, SACCH) frame on a channel corresponding to the configured radio resource. In a GSM system, all frames, the specific frame, and the SACCH frame are all time division multiple access (Time Division Multiple Access, TDMA) frames.

The measurement period can be an SACCH measurement report period; when the channel corresponding to the configured radio resource is a traffic channel, a complete SACCH message block is stored in four 26-multiframes, and a time interval for the 26-multiframes is 120 ms. Therefore, the SACCH measurement report period is 480 ms, which belongs to the prior art and is not further described herein.

For example, when the to-be-measured information further includes the DTX flag and the DTX flag indicates that the DTX of the to-be-measured UE is in an enabled state, the base station measures the specific frame on the channel corresponding to the configured radio resource, where the specific frame includes the SACCH frame and a voice frame with a specific frame number, which belongs to the prior art and is not further described herein.

For example, when the to-be-measured information further includes frequency hopping information and a frequency hopping type indicated by the frequency hopping information is radio frequency hopping, the base station acquires the frequency hopping algorithm according to the frequency hopping information, so that the base station can use a frequency used by the to-be-measured UE to transmit a signal to receive the uplink signal of the to-be-measured UE.

It should be pointed out that, when the to-be-measured information in step 301 further includes measurement time, step 304 can include: within the measurement time, measuring all frames, a specific frame, or an SACCH frame on a channel corresponding to the configured radio resource at intervals of a measurement period.

305: The base station reports the acquired uplink signal measurement result to the BSC.

In the GSM system, the uplink signal measurement result can be carried in an SACCH measurement report message and is reported to the BSC at intervals of the SACCH measurement report period.

306: If the BSC determines to release the radio resource indicated by the radio resource information, the BSC sends a measurement stop message to the base station.

The measurement stop message can include the sector identifier of the to-be-measured sector and the radio resource information of the to-be-measured UE in step 301.

It should be pointed out that, when the to-be-measured information in step 301 further includes a user identifier of the to-be-measured UE, the measurement stop message can include only the user identifier of the to-be-measured UE.

307: The base station receives the measurement stop message sent by the BSC and stops measuring the uplink signal of the to-be-measured UE according to the measurement stop message.

For specific description of step 307, see the related description in the embodiment shown in FIG. 1.

In the signal measurement method according to this embodiment of the present invention, the BSC sends the to-be-measured information to the base station, and the base station measures the uplink signal of the to-be-measured UE within the to-be-measured sector according to the to-be-measured information and reports the acquired uplink signal measurement result to the BSC; the BSC receives the uplink signal measurement result reported by the base station. Therefore, the BSC can acquire the measurement result of the uplink signal of the user equipment within each sector in the super cell, so that the BSC can make a sector handover decision according to the measurement result, ensuring call quality of the user equipment and improving user experience; in addition, the base station determines the to-be-measured carrier according to the idle carrier within the to-be-measured sector indicated by the sector identifier, which can not only reduce an operation load of the BSC, but can also more accurately determine the currently available idle carrier, thereby more effectively selecting the to-be-measured carrier.

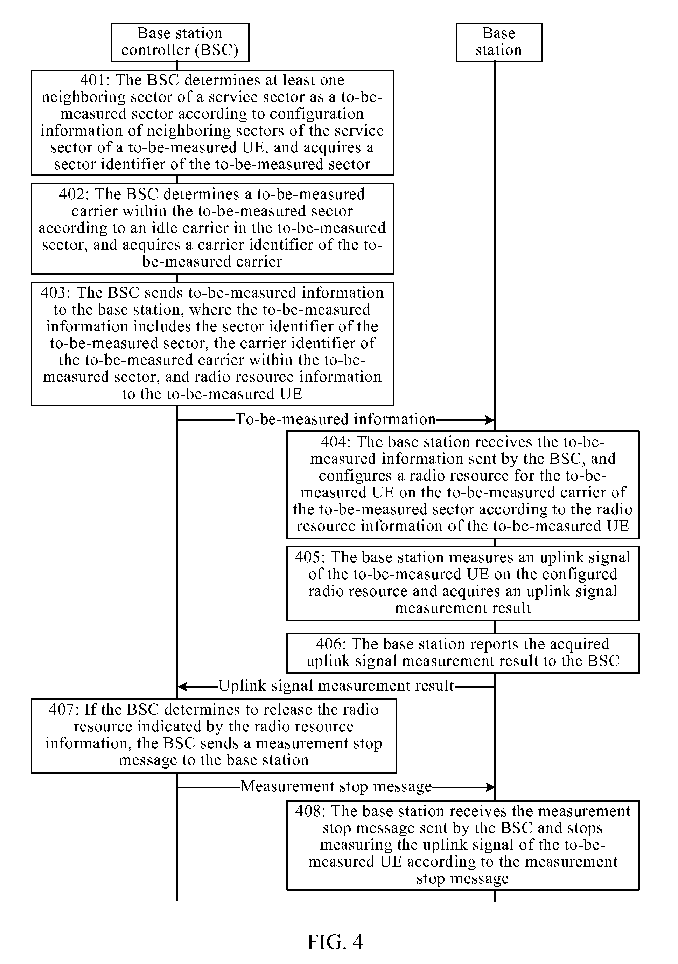

As shown in FIG. 4, an embodiment of the present invention provides still another signal measurement method, which is described by using a BSC as an example and specifically described as follows:
401: The BSC determines at least one neighboring sector of a service sector as a to-be-measured sector according to configuration information of neighboring sectors of the service sector of a to-be-measured UE, and acquires a sector identifier of the to-be-measured sector.

The configuration information of the neighboring sector of the service sector can be preset in the BSC, which belongs to the prior art and is not further described herein.

402: The BSC determines a to-be-measured carrier within the to-be-measured sector according to an idle carrier in the to-be-measured sector, and acquires a carrier identifier of the to-be-measured carrier.

For specific description of the sector identifier and the carrier identifier, see the related description in step 101.

403: The BSC sends to-be-measured information to a base station, where the to-be-measured information includes the sector identifier of the to-be-measured sector, the carrier identifier of the to-be-measured carrier within the to-be-measured sector, and radio resource information to the to-be-measured UE.

404: The base station receives the to-be-measured information sent by the BSC, and configures a radio resource for the to-be-measured UE on the to-be-measured carrier of the to-be-measured sector according to the radio resource information of the to-be-measured UE.

For specific description of the configuring of the radio resource for the to-be-measured UE on the to-be-measured carrier of the to-be-measured sector according to the radio resource information of the to-be-measured UE, see the related description in step 303.

405: The base station measures an uplink signal of the to-be-measured UE on the configured radio resource and acquires an uplink signal measurement result.

For specific description of step 405, see the related description in step 304.

406: The base station reports the acquired uplink signal measurement result to the BSC.

407: If the BSC determines to release the radio resource indicated by the radio resource information, the BSC sends a measurement stop message to the base station.

408: The base station receives the measurement stop message sent by the BSC and stops measuring the uplink signal of the to-be-measured UE according to the measurement stop message.

In the signal measurement method according to this embodiment of the present invention, the BSC sends the to-be-measured information to the base station, and the base station measures the uplink signal of the to-be-measured UE within the to-be-measured sector according to the to-be-measured information and reports the acquired uplink signal measurement result to the BSC; the BSC receives the uplink signal measurement result reported by the base station. Therefore, the BSC can acquire the measurement result of the uplink signal of the user equipment within each sector in a super cell, so that the BSC can make a sector handover decision according to the measurement result, ensuring call quality of the user equipment and improving user experience; in addition, the base station determines the to-be-measured sector and the to-be-measured carrier, thereby prevent determining a sector that does not include an idle carrier in the neighboring sectors as the to-be-measured sector.

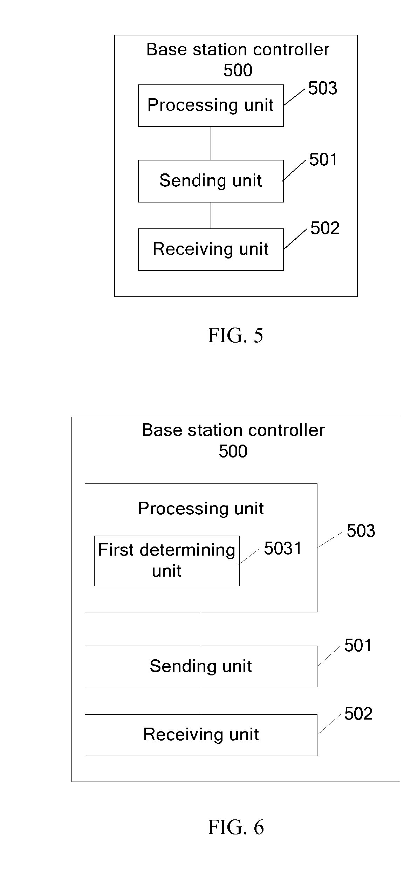

As shown in FIG. 5, an embodiment of the present invention provides a base station controller 500, including a sending unit 501, a receiving unit 502, and a processing unit 503, which are specifically described as follows:
the processing unit 503 is configured to acquire to-be-measured information, where the to-be-measured information includes a sector identifier of a to-be-measured sector in a super cell and radio resource information of a to-be-measured user equipment UE, and the super cell includes two or more sectors;
the sending unit 501 is configured to send the to-be-measured information to a base station, so that the base station measures an uplink signal of the to-be-measured UE within the to-be-measured sector according to the to-be-measured information, and reports an acquired uplink signal measurement result to the base station controller 500; and
the receiving unit 502 is configured to receive the uplink signal measurement result reported by the base station, where:
   the radio resource information is used to indicate a radio resource occupied by the to-be-measured UE within a service sector of the to-be-measured UE and can specifically include: a time-frequency resource occupied by the to-be-measured UE within the service sector of the to-be-measured UE and a TSC of the to-be-measured UE within the service sector; or
   the time-frequency resource and the TSC, and frequency hopping information and/or a DTX flag of the to-be-measured UE within the service sector.

Further, the to-be-measured information can further include measurement time and/or a user identifier of the to-be-measured UE.

It should be noted that, the base station controller 500 can be used to perform the steps in the embodiments shown in FIG. 1, FIG. 3, or FIG. 4. For specific description of the time-frequency resource, the frequency hopping information, and the user identifier, and the like, see the related description in the embodiments shown in FIG. 1, FIG. 3, or FIG. 4, which is not further described herein.

Optionally, as shown in FIG. 6, the processing unit 503 can include:
a first determining unit 5031, configured to determine at least one neighboring sector of the service sector as the to-be-measured sector according to configuration information of neighboring sectors of the service sector of the to-be-measured UE, acquire the sector identifier of the to-be-measured sector, and send the sector identifier to the sending unit 501; or
select at least one sector including an idle carrier among the neighboring sectors as the to-be-measured sector according to the configuration information of the neighboring sectors of the service sector and idle carriers of the neighboring sectors of the service sector, and acquire the sector identifier of the to-be-measured sector.

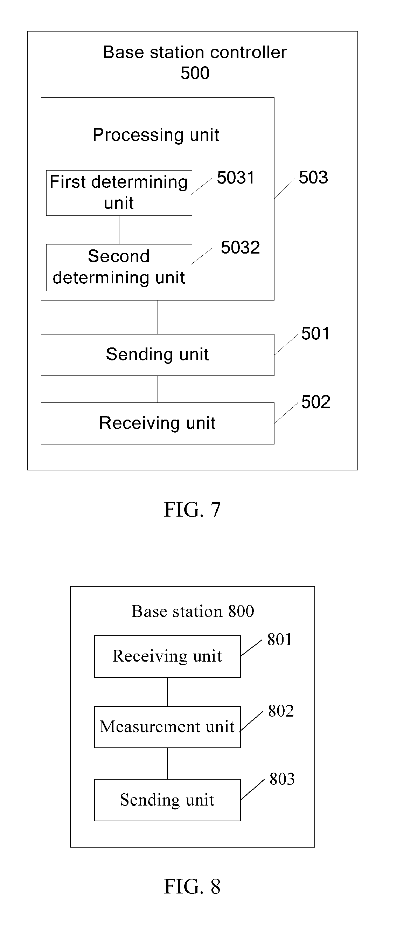

Further, as shown in FIG. 7, the to-be-measured information further includes a carrier identifier of a to-be-measured carrier within the to-be-measured sector, and the processing unit 503 further includes:
a second determining unit 5032, configured to determine the to-be-measured carrier within the to-be-measured sector according to the idle carrier within the to-be-measured sector determined by the first determining unit 5031, acquire the carrier identifier of the to-be-measured carrier, and send the carrier identifier to the sending unit 501.

Optionally, the receiving unit 502 is further configured to acquire an uplink signal measurement result of the to-be-measured UE within the service sector of the to-be-measured UE; and
the processing unit 503 is further configured to judge whether the uplink signal measurement result of the to-be-measured UE within the service sector of the to-be-measured UE meets a preset condition; if yes, the processing unit 503 instructs the sending unit 501 to send the to-be-measured information to the base station.

Optionally, the processing unit 503 is further configured to:
if it is determined to release the radio resource indicated by the radio resource information, instruct the sending unit 501 to send a measurement stop message to the base station, so that the base station stops measuring the uplink signal of the to-be-measured UE according to the measurement stop message.

The measurement stop message can include the sector identifier of the to-be-measured sector and the radio resource information of the to-be-measured UE; or when the to-be-measured information includes the user identifier of the to-be-measured UE, the measurement stop message can include the user identifier of the to-be-measured UE.

The base station controller according to this embodiment of the present invention is configured to send the to-be-measured information to the base station, so that the base station measures the uplink signal of the to-be-measured UE within the to-be-measured sector according to the to-be-measured information and reports the acquired uplink signal measurement result to the base station controller; the base station controller receives the uplink signal measurement result reported by the base station. Therefore, the base station controller can acquire the measurement result of the uplink signal of the user equipment within each sector in the super cell, so that the base station controller can make a sector handover decision according to the measurement result, ensuring call quality of the user equipment and improving user experience.

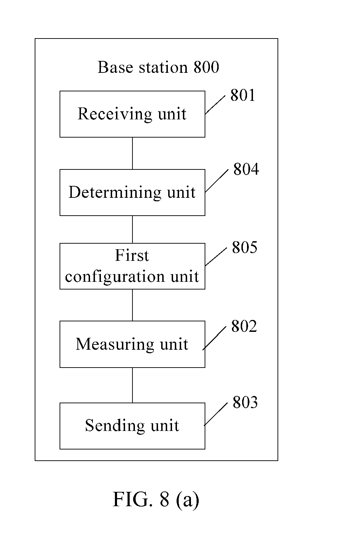

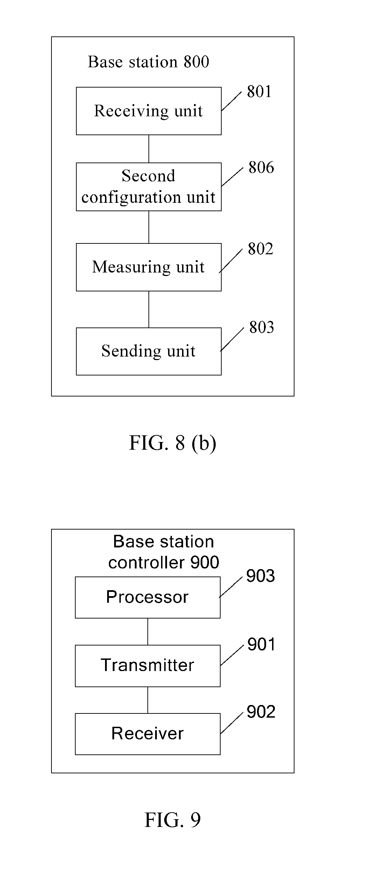

As shown in FIG. 8, an embodiment of the present invention provides a base station, including a receiving unit 801, a measuring unit 802, and a sending unit 803, which are specifically described as follows:
the receiving unit 801 is configured to receive to-be-measured information sent by a BSC, where the to-be-measured information includes a sector identifier of a to-be-measured sector in a super cell and radio resource information of a to-be-measured UE, the radio resource information is used to indicate a radio resource occupied by the to-be-measured UE within a service sector of the to-be-measured UE, and the super cell includes two or more sectors;
the measuring unit 802 is configured to measure an uplink signal of the to-be-measured UE within the to-be-measured sector according to the to-be-measured information received by the receiving unit 801; and
the sending unit 803 is configured to report an uplink signal measurement result acquired by the measuring unit 802 to the BSC.

The radio resource information of the to-be-measured UE can specifically include: a time-frequency resource occupied by the to-be-measured UE within the service sector and a TSC of the to-be-measured UE within the service sector; or
the time-frequency resource and the TSC, and frequency hopping information and/or a DTX flag of the to-be-measured UE within the service sector.

It should be noted that, the base station 800 can be used to perform the steps in the embodiments shown in FIG. 2 to FIG. 4. For specific description of the time-frequency resource, the frequency hopping information, a user identifier, and the like, see the related description in the embodiments shown in FIG. 2 to FIG. 4, which is not further described herein.

Optionally, as shown in FIG. 8 (a), the base station 800 can further include a determining unit 804 and a first configuration unit 805, where:
the determining unit 804 is configured to determine a to-be-measured carrier according to an idle carrier within the to-be-measured sector indicated by the sector identifier in the to-be-measured information received by the receiving unit 801;
the first configuration unit 805 is configured to configure a radio resource for the to-be-measured UE on the to-be-measured carrier of the to-be-measured sector determined by the determining unit 804, according to the radio resource information in the to-be-measured information received by the receiving unit 801; and
the measuring unit 802 is further configured to measure the uplink signal of the to-be-measured UE on the radio resource configured by the first configuration unit 805.

Optionally, the to-be-measured information can further include a carrier identifier of the to-be-measured carrier within the to-be-measured sector; as shown in FIG. 8 (b), the base station 800 can further include a second configuration unit 806, where:
the second configuration unit 806 is configured to configure a radio resource for the to-be-measured UE on the to-be-measured carrier indicated by the carrier identifier within the to-be-measured sector indicated by the sector identifier according to the radio resource information in the to-be-measured information received by the receiving unit 801; and
the measuring unit 802 is further configured to measure the uplink signal of the to-be-measured UE on the radio resource configured by the second configuration unit 806.

Optionally, the measuring unit 802 is specifically configured to:
within a measurement period, measure all frames, a specific frame, or an SACCH frame on a channel corresponding to the configured radio resource.

Optionally, the to-be-measured information can further include measurement time, and the measuring unit 802 is specifically configured to:
within the measurement time, measure all frames, a specific frame, or an SACCH frame on a channel corresponding to the configured radio resource at intervals of a measurement period.

Optionally, the receiving unit 801 is further configured to receive a measurement stop message sent by the base station controller, where the measurement stop message includes the sector identifier of the to-be-measured sector and the radio resource information of the to-be-measured UE, or the user identifier of the to-be-measured UE; and
the measuring unit 802 is further configured to stop measuring the uplink signal of the to-be-measured UE according to the measurement stop message received by the receiving unit 801.

The base station according to this embodiment of the present invention is configured to receive the to-be-measured information sent by the base station controller, measure the uplink signal of the to-be-measured UE within the to-be-measured sector according to the to-be-measured information and report the acquired uplink signal measurement result to the base station controller. Therefore, the base station controller can acquire the measurement result of the uplink signal of the user equipment within each sector in the super cell, so that the base station controller can make a sector handover decision according to the measurement result, ensuring call quality of the user equipment and improving user experience.

As shown in FIG. 9, an embodiment of the present invention provides a base station controller 900, including a transmitter 901 and a receiver 902, which are specifically described as follows:
a processor 903 is configured to acquire to-be-measured information, where the to-be-measured information includes a sector identifier of a to-be-measured sector in a super cell and radio resource information of a to-be-measured UE, and the super cell includes two or more sectors;
the transmitter 901 is configured to send the to-be-measured information acquired by the processor 903 to a base station, so that the base station measures an uplink signal of the to-be-measured UE within the to-be-measured sector according to the to-be-measured information, and reports an acquired uplink signal measurement result to the base station controller 900; and
the receiving unit 902 is configured to receive the uplink signal measurement result reported by the base station, where:
   the radio resource information is used to indicate a radio resource occupied by the to-be-measured UE within a service sector of the to-be-measured UE and can specifically include: a time-frequency resource occupied by the to-be-measured UE within the service sector of the to-be-measured UE and a TSC of the to-be-measured UE within the service sector; or
   the time-frequency resource and the TSC, and frequency hopping information and/or a DTX flag of the to-be-measured UE within the service sector.

Further, the to-be-measured information can further include measurement time and/or a user identifier of the to-be-measured UE.

It should be noted that, the base station controller 900 can be used to perform steps in the embodiments shown in FIG. 1, FIG. 3, or FIG. 4. For specific description of the time-frequency resource, the frequency hopping information, the user identifier, and the like, see the related description in the embodiments shown in FIG. 1, FIG. 3, or FIG. 4, which is not further described herein.

Optionally, the processor 903 is further configured to:
determine at least one neighboring sector of the service sector as the to-be-measured sector according to configuration information of neighboring sectors of the service sector of the to-be-measured UE, and acquire the sector identifier of the to-be-measured sector; or select at least one sector including an idle carrier among the neighboring sectors as the to-be-measured sector according to the configuration information of the neighboring sectors of the service sector and idle carriers of the neighboring sectors of the service sector, and acquire the sector identifier of the to-be-measured sector.

Further, the processor 903 is further configured to:
determine a to-be-measured carrier within the to-be-measured sector according to the idle carrier in the to-be-measured sector, and acquire a carrier identifier of the to-be-measured carrier.

Optionally, the receiver 902 is further configured to acquire a signal measurement result of the to-be-measured UE within the service sector of the to-be-measured UE; and
the processor 903 is further configured to judge whether the signal measurement result of the to-be-measured UE within the service sector of the to-be-measured UE meets a preset condition; if yes, the transmitter 901 sends the to-be-measured information to the base station.

Optionally, the processor 903 is further configured to:
if it is determined to release the radio resource indicated by the radio resource information, send a measurement stop message to the base station by using the transmitter 901, so that the base station stops measuring the uplink signal of the to-be-measured UE according to the measurement stop message.

The measurement stop message can include the sector identifier of the to-be-measured sector and the radio resource information of the to-be-measured UE; or when the to-be-measured information includes the user identifier of the to-be-measured UE, the measurement stop message can include the user identifier of the to-be-measured UE.

The base station controller according to this embodiment of the present invention is configured to send the to-be-measured information to the base station, so that the base station measures the uplink signal of the to-be-measured UE within the to-be-measured sector according to the to-be-measured information and reports the acquired uplink signal measurement result to the base station controller; the base station controller receives the uplink signal measurement result reported by the base station. Therefore, the base station controller can acquire the measurement result of the uplink signal of the user equipment within each sector in the super cell, so that the base station controller can make a sector handover decision according to the measurement result, ensuring call quality of the user equipment and improving user experience.

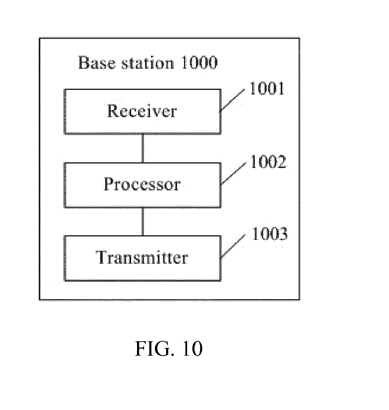

As shown in FIG. 10, an embodiment of the present invention provides a base station 1000, including a receiver 1001, a processor 1002, and a transmitter 1003, which are specifically described as follows:
the receiver 1001 is configured to receive to-be-measured information sent by a base station controller, where the to-be-measured information includes a sector identifier of a to-be-measured sector in a super cell and radio resource information of a to-be-measured UE, the radio resource information is used to indicate a radio resource occupied by the to-be-measured UE within a service sector of the to-be-measured UE, and the super cell includes two or more sectors;
the processor 1002 is configured to measure an uplink signal of the to-be-measured UE within the to-be-measured sector according to the to-be-measured information received by the receiver 1001; and
the transmitter 1003 is configured to report an uplink signal measurement result acquired by the processor 1002 to the base station controller.

The radio resource information can specifically include: a time-frequency resource occupied by the to-be-measured UE within the service sector and a TSC of the to-be-measured UE within the service sector; or
the time-frequency resource and the TSC, and frequency hopping information and/or a DTX flag of the to-be-measured UE within the service sector.

It should be noted that, the base station 1000 can be used to perform the steps in the embodiments shown in FIG. 2 to FIG. 4. For specific description of the time-frequency resource, the frequency hopping information, and a user identifier, and the like, see the related description in the embodiments shown in FIG. 2 to FIG. 4, which is not further described herein.

Optionally, the processor 1002 is specifically configured to:
determine a to-be-measured carrier according to an idle carrier within the to-be-measured sector indicated by the sector identifier;
configure a radio resource for the to-be-measured UE on the to-be-measured carrier of the to-be-measured sector according to the radio resource information of the to-be-measured UE; and
measure the uplink signal of the to-be-measured UE on the configured radio resource.

Optionally, the to-be-measured information can further include a carrier identifier of the to-be-measured carrier within the to-be-measured sector; the processor 1002 is specifically configured to:
configure a radio resource for the to-be-measured UE on the to-be-measured carrier indicated by the carrier identifier in the to-be-measured sector indicated by the sector identifier according to the radio resource information of the to-be-measured UE; and
measure the uplink signal of the to-be-measured UE on the configured radio resource.

Optionally, the processor 1002 is further configured to:
within a measurement period, measure all frames, a specific frame, or an SACCH frame on a channel corresponding to the configured radio resource.

Further, the to-be-measured information can further include measurement time, and the processor 1002 is further configured to:
within the measurement time, measure all frames, a specific frame, or an SACCH frame on a channel corresponding to the configured radio resource at intervals of a measurement period.

Optionally, the receiver 1001 is further configured to receive a measurement stop message sent by the base station controller; and
the processor 1002 is further configured to stop measuring the uplink signal of the to-be-measured UE according to the measurement stop message received by the receiver 1001.

The measurement stop message includes the sector identifier of the to-be-measured sector and the radio resource information of the to-be-measured UE, or the user identifier of the to-be-measured UE.

The base station according to this embodiment of the present invention is configured to receive the to-be-measured information sent by the base station controller, measure the uplink signal of the to-be-measured UE within the to-be-measured sector according to the to-be-measured information and report the acquired uplink signal measurement result to the base station controller. Therefore, the base station controller can acquire the measurement result of the uplink signal of the user equipment within each sector in the super cell, so that the base station controller can make a sector handover decision according to the measurement result, ensuring call quality of the user equipment and improving user experience.

A person of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. A signal measurement method, wherein the method is applicable to a radio communications system, the radio communications system comprises a super cell, the super cell comprises two or more sectors, and the method comprises:
sending, by a base station controller, to-be-measured information to a base station, wherein the to-be-measured information comprises a sector identifier of a to-be-measured sector in the super cell and radio resource information of a to-be-measured user equipment UE, so that the base station measures an uplink signal of the to-be-measured UE within the to-be-measured sector according to the to-be-measured information, and reports an acquired uplink signal measurement result to the base station controller; and
receiving, by the base station controller, the uplink signal measurement result reported by the base station, wherein:
the radio resource information is used to indicate a radio resource occupied by the to-be-measured UE within a service sector of the to-be-measured UE, and the to-be-measured sector and the service sector belong to a same super cell.

2. The method according to claim 1, wherein the radio resource information comprises: a time-frequency resource occupied by the to-be-measured UE within the service sector and a training sequence code TSC of the to-be-measured UE within the service sector; or
the time-frequency resource and the TSC, and frequency hopping information and/or a discontinuous transmission DTX flag of the to-be-measured UE within the service sector.

3. The method according to claim 1 or 2, wherein the to-be-measured information further comprises measurement time and/or a user identifier of the to-be-measured UE.

4. The method according to any one of claims 1 to 3, wherein before the sending, by a base station controller, to-be-measured information to a base station, the method further comprises:
determining, by the base station controller, at least one neighboring sector of the service sector as the to-be-measured sector according to configuration information of neighboring sectors of the service sector, and acquiring the sector identifier of the to-be-measured sector; or
selecting, by the base station controller, at least one sector comprising an idle carrier among the neighboring sectors as the to-be-measured sector according to the configuration information of the neighboring sectors of the service sector and idle carriers in the neighboring sectors of the service sector, and acquiring the sector identifier of the to-be-measured sector.

5. The method according to claim 4, wherein the to-be-measured information further comprises a carrier identifier of a to-be-measured carrier within the to-be-measured sector, and after the acquiring the sector identifier of the to-be-measured sector, the method further comprises:
determining, by the base station controller, the to-be-measured carrier within the to-be-measured sector according to the idle carrier in the to-be-measured sector; and
acquiring, by the base station controller, the carrier identifier of the to-be-measured carrier.

6. The method according to any one of claims 1 to 5, wherein before the sending, by a base station controller, to-be-measured information to a base station, the method further comprises:
acquiring, by the base station controller, a signal measurement result of the to-be-measured UE within the service sector; and
the sending, by a base station controller, to-be-measured information to a base station comprises:
judging, by the base station controller, whether the signal measurement result of the to-be-measured UE within the service sector meets a preset condition; if yes, sending the to-be-measured information to the base station.

7. The method according to any one of claims 1 to 6, further comprising:
if the base station controller determines to release the radio resource indicated by the radio resource information, sending a measurement stop message to the base station, so that the base station stops measuring the uplink signal of the to-be-measured UE according to the measurement stop message.

8. A signal measurement method, wherein the method is applicable to a radio communications system, the radio communications system comprises a super cell, the super cell comprises two or more sectors, and the method comprises:
receiving, by a base station, to-be-measured information sent by a base station controller, wherein the to-be-measured information comprises a sector identifier of a to-be-measured sector in the super cell and radio resource information of a to-be-measured user equipment UE, and the radio resource information is used to indicate a radio resource occupied by the to-be-measured UE within a service sector of the to-be-measured UE; and
measuring, by the base station, an uplink signal of the to-be-measured UE within the to-be-measured sector according to the to-be-measured information, and reporting an acquired uplink signal measurement result to the base station controller.

9. The method according to claim 8, wherein the radio resource information comprises: a time-frequency resource occupied by the to-be-measured UE within the service sector and a training sequence code TSC of the to-be-measured UE within the service sector; or
the time-frequency resource and the TSC, and frequency hopping information and/or a discontinuous transmission DTX flag of the to-be-measured UE within the service sector.

10. The method according to claim 8 or 9, wherein the measuring, by the base station, an uplink signal of the to-be-measured UE within the to-be-measured sector according to the to-be-measured information comprises:
determining, by the base station, a to-be-measured carrier according to an idle carrier within the to-be-measured sector indicated by the sector identifier;
configuring, by the base station, a radio resource for the to-be-measured UE on the to-be-measured carrier of the to-be-measured sector according to the radio resource information; and
measuring, by the base station, the uplink signal of the to-be-measured UE on the configured radio resource.

11. The method according to claim 8 or 9, wherein the to-be-measured information further comprises a carrier identifier of a to-be-measured carrier within the to-be-measured sector; and the measuring, by the base station, an uplink signal of the to-be-measured UE within the to-be-measured sector according to the to-be-measured information comprises:
configuring, by the base station, a radio resource for the to-be-measured UE on the to-be-measured carrier indicated by the carrier identifier within the to-be-measured sector indicated by the sector identifier according to the radio resource information; and
measuring, by the base station, the uplink signal of the to-be-measured UE on the configured radio resource.

12. The method according to claim 10 or 11, wherein the measuring, by the base station, the uplink signal of the to-be-measured UE on the configured radio resource comprises:
within a measurement period, measuring all frames, a specific frame, or a slow associated control channel SACCH frame on a channel corresponding to the configured radio resource.

13. The method according to claim 10 or 11, wherein the to-be-measured information further comprises measurement time, and the measuring, by the base station, the uplink signal of the to-be-measured UE on the configured radio resource comprises:
within the measurement time, measuring all frames, a specific frame, or an SACCH frame on a channel corresponding to the configured radio resource at intervals of a measurement period.

14. The method according to any one of claims 8 to 13, further comprising:
receiving, by the base station, a measurement stop message sent by the base station controller; and
stopping, by the base station, measuring the uplink signal of the to-be-measured UE according to the measurement stop message.

15. A base station controller, comprising:
a processing unit, configured to acquire to-be-measured information, wherein the to-be-measured information comprises a sector identifier of a to-be-measured sector in a super cell and radio resource information of a to-be-measured user equipment UE, and the super cell comprises two or more sectors;
a sending unit, configured to send the to-be-measured information acquired by the processing unit to a base station, so that the base station measures an uplink signal of the to-be-measured UE within the to-be-measured sector according to the to-be-measured information, and reports an acquired uplink signal measurement result to the base station controller; and
a receiving unit, configured to receive the uplink signal measurement result reported by the base station, wherein:
the radio resource information is used to indicate a radio resource occupied by the to-be-measured UE within a service sector of the to-be-measured UE.

16. The base station controller according to claim 15, wherein the radio resource information comprises: a time-frequency resource occupied by the to-be-measured UE within the service sector and a training sequence code TSC of the to-be-measured UE within the service sector; or
the time-frequency resource and the TSC, and frequency hopping information and/or a discontinuous transmission DTX flag of the to-be-measured UE within the service sector.

17. The base station controller according to claim 15 or 16, wherein the to-be-measured information further comprises measurement time and/or a user identifier of the to-be-measured UE.

18. The base station controller according to any one of claims 15 to 17, wherein the processing unit comprises:
a first determining unit, configured to: determine at least one neighboring sector of the service sector as the to-be-measured sector according to configuration information of neighboring sectors of the service sector, acquire the sector identifier of the to-be-measured sector, and send the sector identifier to the sending unit; or select at least one sector comprising an idle carrier among the neighboring sectors as the to-be-measured sector according to the configuration information of the neighboring sectors of the service sector and idle carriers in the neighboring sectors of the service sector, acquire the sector identifier of the to-be-measured sector, and send the sector identifier to the sending unit.

19. The base station controller according to claim 18, wherein the to-be-measured information further comprises a carrier identifier of a to-be-measured carrier within the to-be-measured sector, and the processing unit further comprises:
a second determining unit, configured to determine the to-be-measured carrier within the to-be-measured sector according to the idle carrier within the to-be-measured sector determined by the first determining unit, acquire the carrier identifier of the to-be-measured carrier, and send the carrier identifier to the sending unit.

20. The base station controller according to any one of claims 15 to 19, wherein:
the receiving unit is further configured to acquire an uplink signal measurement result of the to-be-measured UE within the service sector; and
the processing unit is further configured to: judge whether the uplink signal measurement result of the to-be-measured UE within the service sector meets a preset condition; if yes, send the to-be-measured information to the base station.

21. The base station controller according to any one of claims 15 to 20, wherein the processing unit is further configured to:
if it is determined to release the radio resource indicated by the radio resource information, instruct the sending unit to send a measurement stop message to the base station, so that the base station stops measuring the uplink signal of the to-be-measured UE according to the measurement stop message.

22. A base station, comprising:
a receiving unit, configured to receive to-be-measured information sent by a base station controller, wherein the to-be-measured information comprises a sector identifier of a to-be-measured sector in a super cell and radio resource information of a to-be-measured user equipment UE, the radio resource information is used to indicate a radio resource occupied by the to-be-measured UE within a service sector of the to-be-measured UE, and the super cell comprises two or more sectors;
a measuring unit, configured to measure an uplink signal of the to-be-measured UE within the to-be-measured sector according to the to-be-measured information received by the receiving unit; and
a sending unit, configured to report an uplink signal measurement result acquired by the measuring unit to the base station controller.

23. The base station according to claim 22, wherein the radio resource information comprises: a time-frequency resource occupied by the to-be-measured UE within the service sector and a training sequence code TSC of the to-be-measured UE within the service sector; or
the time-frequency resource and the TSC, and frequency hopping information and/or a discontinuous transmission DTX flag of the to-be-measured UE within the service sector.

24. The base station according to claim 22 or 23, wherein the base station further comprises a determining unit and a first configuration unit;
the determining unit is configured to determine a to-be-measured carrier according to an idle carrier within the to-be-measured sector indicated by the sector identifier in the to-be-measured information received by the receiving unit;
the first configuration unit is configured to configure a radio resource for the to-be-measured UE on the to-be-measured carrier of the to-be-measured sector determined by the determining unit, according to the radio resource information in the to-be-measured information received by the receiving unit; and
the measuring unit is further configured to measure the uplink signal of the to-be-measured UE on the radio resource configured by the first configuration unit.

25. The base station according to claim 22 or 23, wherein the to-be-measured information further comprises a carrier identifier of a to-be-measured carrier within the to-be-measured sector, and the base station further comprises a second configuration unit;
the second configuration unit is configured to configure a radio resource for the to-be-measured UE on the to-be-measured carrier indicated by the carrier identifier within the to-be-measured sector indicated by the sector identifier according to the radio resource information in the to-be-measured information received by the receiving unit; and
the measuring unit is further configured to measure the uplink signal of the to-be-measured UE on the radio resource configured by the second configuration unit.

26. The base station according to claim 24 or 25, wherein the measuring unit is specifically configured to:
within a measurement period, measure all frames, a specific frame, or a slow associated control channel SACCH frame on a channel corresponding to the configured radio resource.

27. The base station according to claim 24 or 25, wherein the to-be-measured information further comprises measurement time and the measuring unit is specifically configured to:
within the measurement time, measure all frames, a specific frame, or an SACCH frame on a channel corresponding to the configured radio resource at intervals of a measurement period.

28. The base station according to any one of claims 22 to 27, wherein:
the receiving unit is further configured to receive a measurement stop message sent by the base station controller; and
the measuring unit is further configured to stop measuring the uplink signal of the to-be-measured UE according to the measurement stop message received by the receiving unit.
